(19) Europäisches Patentamt
European Patent Office
Office européen des brevets

(11) **EP 0 882 966 B1**

(12) **EUROPÄISCHE PATENTSCHRIFT**

(45) Veröffentlichungstag und Bekanntmachung des Hinweises auf die Patenterteilung:
**03.01.2001 Patentblatt 2001/01**

(51) Int Cl.$^7$: **G01L 19/08**

(21) Anmeldenummer: **98109973.2**

(22) Anmeldetag: **02.06.1998**

(54) **Einrichtung zur Darstellung barometrischer Luftdruckveränderungen mit Intervallversorgung**

Device for representing barometric air pressure changes with interval supply

Dispositif de représentation des changements de la pression d'air barométrique avec distribution en intervalles

(84) Benannte Vertragsstaaten:
**AT CH DE ES FR GB IT LI SE**

(30) Priorität: **03.06.1997 DE 19723186**
**11.09.1997 DE 29716329 U**
**26.05.1998 DE 19823266**

(43) Veröffentlichungstag der Anmeldung:
**09.12.1998 Patentblatt 1998/50**

(73) Patentinhaber: **Wallrafen, Werner, Dipl.-Ing.**
**65719 Hofheim (DE)**

(72) Erfinder: **Wallrafen, Werner, Dipl.-Ing.**
**65719 Hofheim (DE)**

(74) Vertreter: **Klein, Thomas, Dipl.-Ing. (FH)**
**Wackernheimer Strasse 27**
**55262 Heidesheim (DE)**

(56) Entgegenhaltungen:
**DE-A- 3 431 130     US-A- 5 249 863**

- **PATENT ABSTRACTS OF JAPAN vol. 097, no. 002, 28. Februar 1997 & JP 08 261854 A (RHYTHM WATCH CO LTD), 11. Oktober 1996**

## Beschreibung

Die Erfindung bezieht sich auf eine Einrichtung zur Darstellung barometrischer Luftdruckveränderungen mit einem elektronischen Luftdrucksensor und einer digitalen Differenzierschaltung, in der ein Differenzenquotient $\Delta P/\Delta t$ gebildet wird, der mit einer Anzeige der Luftdruckänderungsgeschwindigkeit mit Vorzeichen und Betrag in Verbindung steht.

Aus der DE-PS 34 31 130 ist eine Einrichtung der eingangs genannten Art bekannt, die eine barometrische Luftdruckänderungsgeschwindigkeit in Betrag und Richtung zur Anzeige bringt. Diese Einrichtung ermöglicht aber nicht ohne weiteres einen netzunabhängigen Batteriebetrieb. Bei einer Analoganzeige mit Magnetspulenmeßwerk ist der hohe permanente Stromverbrauch nachteilig. Darüber hinaus benötigt der Drucksensor ebenfalls viel Strom. Damit ist ein Dauerbetrieb mit einer Batterieversorgung für viele Monate nicht möglich.

Aus Patent Abstract of Japan vol. 097, no. 002, 28. Februar 1997, JP 08 261854 A ist eine Einrichtung zur Darstellung barometrischer Luftdruckveränderungen bekannt, bei der durch einen Sensor in konstanten Zeitintervallen Druckmessungen durchgeführt werden, aus denen in einem Intervall von z.B. fünf Minuten ein Mittelwert gebildet und als Erfassungswert gespeichert wird. Dieser Erfassungswert wird mit dem gespeicherten Erfassungswert verglichen. Bei Übereinstimmung der Erfassungswerte wird der letzte Erfassungswert endgültig gespeichert und angezeigt.

Aufgabe der Erfindung ist es daher eine Einrichtung der eingangs genannten Art zu schaffen, die einen Batteriebetrieb über mehrere Monate ermöglicht.

Diese Aufgabe wird erfindungsgemäß dadurch gelöst, daß die elektrische Versorgung des Luftdrucksensors in zyklischen Intervallen erfolgt und daß die zyklisch ermittelten Luftdruckmeßwerte auf Plausibilität geprüft werden, wobei nur die plausiblen Luftdruckmeßwerte für die Bildung des Differenzenquotienten $\Delta P/\Delta t$ berücksichtigt werden.

Eine weitere Lösung der Aufgabe besteht darin, daß die elektrische Versorgung des Luftdrucksensors in zyklischen Intervallen erfolgt, daß von den zyklisch ermittelten Luftdruckmeßwerten die Differenzenquotienten $\Delta P/\Delta t$ gebildet und die Differenzenquotienten $\Delta P/\Delta t$ auf Plausibilität geprüft werden, wobei nur die plausiblen Differenzenquotienten zur Ansteuerung der Anzeige berücksichtigt werden.

Es versteht sich, daß die Anzeige der Luftdruckänderungsgeschwindigkeit inhaltlich auf jegliche Art und Weise der Darstellungsform erfolgen kann. Es kann z.B. die Darstellung von Vorzeichen und Betrag bei optoelektronischen Anzeigen auch nur durch Pfeilsymbole mit oder ohne Skala und Bezifferung erfolgen.

Durch diese Einrichtung ist ein netzunabhängiger kabelloser Batteriebetrieb über längere Zeit sowie eine kostengünstige Herstellung der Einrichtung möglich. Ein weiterer Vorteil der getakteten Versorgung des Luftdrucksensors liegt darin, daß sich der Luftdrucksensor in der kurzen Betriebszeit nur wenig aufheizen kann und somit allenfalls nur ein kleiner durch Selbstaufheizung bedingter Meßfehler möglich ist.

Um zumindest bei Inbetriebnahme der Einrichtung zur vermeiden, daß der dann gemessene Luftdruckwert ein unplausibler Wert und somit die Anzeige der Luftdruckänderungsgeschwindigkeit unkorrekt ist, können mindestens drei Luftdruckmeßwerte in einem vorgegebenen Zeitintervall abgefragt und in einem Speicher zwischengespeichert werden.

Die Plausibilität kann durch atypisch große Abweichungen einzelner Luftdruckmeßwerte von einem Mittelwert der Luftdruckmeßwerte oder atypisch große Abweichungen einzelner Differenzenquotienten von einem Mittelwert der gebildeten Differenzenquotienten eines vorher vorgegebenen Zeitfensters ermittelt werden. Damit werden meteorologisch atypisch große Abweichungen von dem Mittelwert einer vorgegebenen Druckmeßwertreihe festgestellt, die beispielsweise durch impulsförmige Druckwellen beim Türeschlagen in einem Haus entstehen. Bei einer hohen Empfindlichkeit bzw. Auflösung von unter 0,1 hPa/h ist es von großer Bedeutung auch kleine Störungen durch unplausible Meßwerte zu unterdrücken.

Z.B.bedeutet ein Anstieg von 1 hPa in 0,5 Sekunden eine Luftdruckänderungsgeschwindigkeit von 7200 hPa/h.
Die Pausen zwischen den Abfragezeitpunkten des Luftdrucksensors betragen etwa zwischen einer und zehn Minuten. Im Falle von plötzlich aufkommenden Stürmen oder Orkanen tritt auch die Luftdruckänderung sehr schnell ein. Eine Abfrage des Luftdrucksensors etwa alle zehn bis zwanzig Minuten würde lediglich für eine grobe Barographanzeige, wie sie mit Balkendarstellung üblich ist, ausreichen. Für eine Luftdruckänderungsanzeige ist eine kürzere Abtastzeit insbesondere für plötzliche stürmische Wetterveränderungen sehr bedeutend. Es ist daher von besonderem Vorteil, wenn die Pause zwischen den Abfragezeitpunkten der Luftdrucksensorwerte etwa zwischen 0,5 und 5 Minuten beträgt.

Wird der ermittelte aktuelle Differenzenquotient $\Delta P/\Delta t$ oder der Mittelwert der gebildeten aktuellen plausiblen Differenzenquotienten $\Delta P/\Delta t$ über ein digitales Tiefpaßfilter der Anzeige zugeführt, bei dem vorzugsweise die Zeitkonstante des digitalen Tiefpaßfilters etwa zwischen 0,1 Stunden und zehn Stunden liegt, so werden zeitlich zurückliegende Luftdruckänderungen mitbewertet. Die Gewichtung dieser zurückliegenden Luftdruckänderungen auf die Anzeige nimmt jedoch immer mehr ab, je länger die Meßwerte zurückliegen.

Für die synopische Meteorologie ist dieser natürliche Dämpfungsalgorithmus vorteilhaft, da alle Luftdruckänderungen, die mehr als zwei bis drei Stunden zurückliegen an Prognosebedeutung verlieren. Darüber hinaus ist die gedämpfte Anzeige vorteilhaft gegenüber kurzzeitigen Schwankungen, die für Trendbeobachtungen weniger relevant sind.

In einer vorteilhaften Ausbildung ist die Anzeige ein Flachdisplay wie eine elektrooptische Anzeige, die insbesondere als ein Flüssigkristalldisplay ausgebildet sein kann. Derartige Flachdisplays sind kostengünstig und benötigen wenig Energie, so daß eine Versorgung durch eine Batterie über einen langen Zeitraum möglich ist.

Vorzugsweise sind durch die Anzeige des Flüssigkristalldisplays mindestens fünf abhängig von der ermittelten Luftdruckveränderung ansteuerbare Pfeilsymbole darstellbar, die in einer Reihe angeordnet sind, wobei jedes Pfeilsymbol einem bestimmten Wert einer Luftdruckveränderung zugeordnet ist und die Pfeilrichtung des Pfeilsymbols für die Luftdruckänderung Null etwa horizontal gerichtet ist. Die Darstellungen auf Flachdisplays ermöglichen viele Gestaltungen der Anzeigen. So kann sich die Reihe der Pfeile und ggf. die Skala in einer etwa runden Form, in einer etwa ovalen Form, halbkreisförmig oder auch linear erstrecken. Mit einer nur etwa halbkreisförmigen Anordnung der Pfeilsymbole auf einer Hälfte des Flachdisplays wird genügend Freifläche für weitere Klimadaten verfügbar. Vorzugsweise können auf der zweiten Hälfte des Flachdisplays Temperaturwerte oder relative Luftfeuchtwerte dargestellt werden. Im Zusammenhang mit der Trendanzeige für die Luftdruckentwicklung wird auch in einer weiteren Ausgestaltung zweckmäßigerweise die Anzeige für Temperatur und relative Luftfeuchte mit nebenstehenden Trendpfeilen verknüpft. Damit sind alle auf dem Flachdisplay angezeigten Klimawerte mit Trendaussagen dargestellt.

Für eine weitere Displayflächeneinsparung ist in einer Ausgestaltung die Skala nicht auf dem Flachdisplay sondern auf dem Gehäuse der Einrichtung aufgebracht. Neben der Skala sind ebenso die dazugehörigen Ziffern aus Platzgründen auf dem Gehäuse aufgebracht. Durch diese Maßnahmen werden zusätzlich die Herstellkosten verringert.

Die Skalierung kann eine nichtlineare Einteilung der Luftdruckänderungsgeschwindigkeit auf einem Zifferblatt der Anzeige besitzen. Dabei kann die Skalierung eine in Bereiche aufgeteilte unterschiedliche Skalierung der Luftdruckänderungsgeschwindigkeit auf dem Zifferblatt der Anzeige besitzen.

Ist die Skala im Bereich der Luftdruckänderungsgeschwindigkeit Null gegenüber den Endbereichen der Skala gespreizt, so wird ermöglicht, daß einerseits große Meßwerte anzeigbar sind, aber anderseits im Bereich um 0 hPa/h kleinste aber schon bedeutende Änderungen darstellbar sind, ohne daß übermäßig viele Pfeilsymbole dafür eingesetzt werden müssen.

Der Anzeigebereich der Luftdruckänderungsgeschwindigkeit erstreckt sich vorzugsweise im wesentlichen zwischen - 5 hPa/h und + 5 hPa/h. Damit werden über die üblichen durchschnittlichen Luftdruckänderungsgeschwindigkeiten im Bereich zwischen - 3 hPa/h und + 3 hPa/h hinaus auch Spitzenwerte bis zu - 5 hPa/h und + 5 hPa/h erfaßt.

In einfacher Ausgestaltung kann der Luftdrucksensor ein kapazitiver Luftdrucksensor sein, der mikromechanisch hergestellt werden kann. Vorzugsweise kann mit diesem kapazitiven Sensor eine direkte Wandlung des Luftdruckwertes in ein frequenzanaloges Rechteck-Signal erfolgen, welches von einem Mikrocomputer direkt ausgewertet werden kann. Somit entfällt der Einsatz eines teuren hochauflösenden Analog-Digitalwandlers. Gerade im Hinblick auf eine notwendige hohe Auflösung (z.B. 15 bit) ist dies vorteilhaft.

In einer ebenfalls einfachen Ausgestaltung kann der Luftdrucksensor auch ein preiswerter piezoresistiver Luftdrucksensor sein und aus einem dotierten Halbleiter bestehen.

Weist die Anzeige einen von einem Schrittmotor antreibbaren Zeiger, insbesondere einen über ein Getriebe von einem Schrittmotor antreibbaren Zeiger auf, so führt dies zu einer Energieeinsparung, da nur bei einer Änderung des Anzeigewertes elektrische Energie benötigt wird. Vorzugsweise ist der Schrittmotor ein zweisträngiger Schrittmotor mit Impulsansteuerung für beide Drehrichtungen.

Bei einer schrittmotorgesteuerten Anzeige kann bei jeder Unterbrechung der Spannungsversorgung, beispielsweise bei Batteriewechsel, die Information der Zeigerstellung verloren gehen. Die Anzeige muß demnach bei jeder Wiederinbetriebnahme synchronisiert werden. In einer vorteilhaften Ausgestaltung ist vorgesehen, daß der Zeiger der Anzeige bei Inbetriebnahme zuerst zu einem definierten Referenzpunkt gesteuert wird und danach durch schrittweises Auf- und Abzählen zu dem Anzeigemeßwert geführt wird. Dieser Referenzpunkt ist in einer einfachen Ausführung ein Zeigeranschlag des Zeigers. Von dieser Position aus wird anschließend der Zeiger schrittweise auf die Anzeigewerte geführt.

Bei einer schwächer werdenden Batterie stellt sich das Problem einer einfrierenden Anzeige, so daß nicht ohne weiteres erkannt wird, ob es sich um einen stagnierenden Meßwert handelt oder um eine leere Batterie. Für diesen Fall ist in einer weiteren Ausgestaltung vorgesehen, daß der Zeiger vor Unterschreitung der kleinsten zulässigen Betriebsspannung auf eine Warnposition außerhalb der Meßbereichanzeige gesteuert wird und dort stehen bleibt. Zweckmäßigerweise ist diese Position mit einem Batteriesymbol gekennzeichnet.

Bei Unterschreitung eines vorgegebenen negativen Luftdruckänderungsgeschwindigkeits-Grenzwertes kann eine optische Warnanzeige ansteuerbar sein. Weiterhin kann bei Unterschreitung eines vorgegebenen negativen Luftdruckänderungsgeschwindigkeits-Schwellwertes ein akustischer Alarm ansteuerbar sein. Dieser Schwellwert kann, muß aber nicht mit dem Grenzwert identisch sein. Zusätzlich kann beim Erreichen des Schwellwertes die optische Warnanzeige (Sturmzeichen) blinkend angesteuert werden.

Als weitere Größe kann auf der Anzeige der absolute atmosphärische Luftdruck darstellbar sein.

Ausführungsbeispiele der Erfindung sind in der Zeichnung dargestellt und werden im folgen näher beschreiben. Es zeigen

| | |
|---|---|
| Figur 1 | eine Einrichtung zur Darstellung barometrischer Luftdruckänderungen mit einer Schaltungsanordnung, einem Luft drucksensor, einem Mikrocomputer und Warn- und Anzeige komponenten |
| Figur 2 | ein erstes Ausführungsbeispiel eines Zifferblatts der Ein richtung nach Figur 1 |
| Figur 3 | ein Flußdiagramm der Einrichtung nach Figur 1 |
| Figuren 4 a und 4 b | ein zweites und ein drittes Ausführungsbeispiel eines Zifferblatts der Einrichtung nach Figur 1 |
| Figur 5 | eine weiteres Ausführungsbeispiel eines Flußdiagramms der Einrichtung nach Figur 1 |
| Figur 6 | eine Einrichtung nach Figur 1 mit einem Flüssigkristalldisplay als Anzeige |
| Figur 7 | eine Einrichtung nach Figur 1 mit einem zweiten Ausführungsbeispiel eines Flüssigkristalldisplays als Anzeige |
| Figur 8 | eine Einrichtung nach Figur 1 mit einem dritten Ausführungsbeispiel eines Flüssigkristalldisplays als Anzeige |

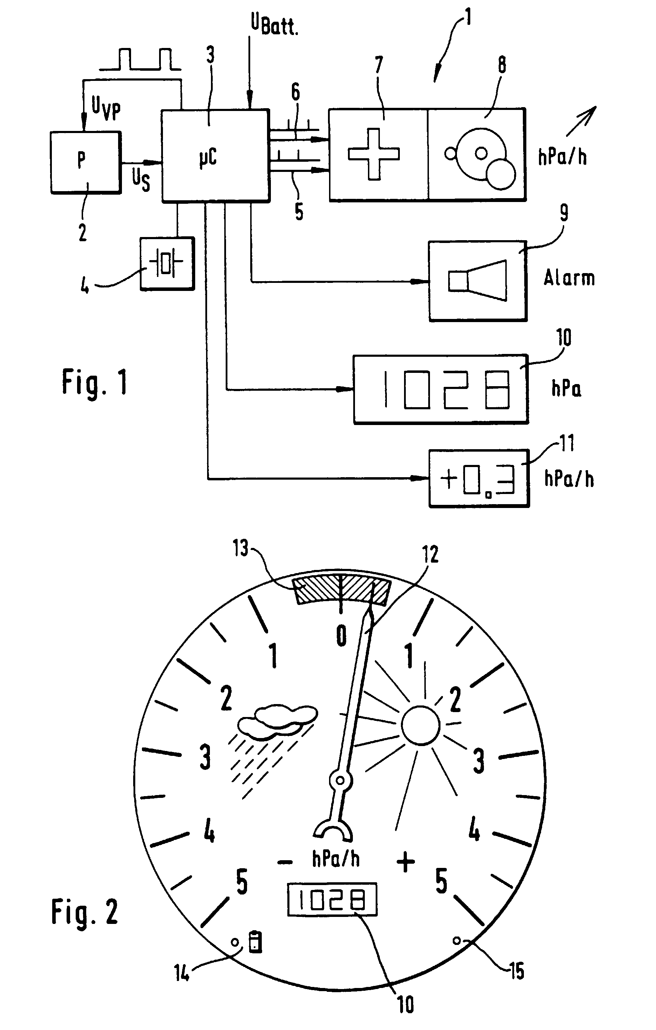

In Figur 1 ist eine Schaltungsanordnung 1 zum Erfassen, Auswerten und Anzeigen der Luftdruckänderungsgeschwindigkeit mit Betrag und Vorzeichen dargestellt. Die Schaltungsanordnung 1 weist einen Luftdrucksensor 2 zur Erfassung des atmosphärischen Luftdrucks P auf. Die elektrische Versorgung des Luftdrucksensors 2 erfolgt mit einer getakteten Funktion $U_{VP}(t)$, die von einem Ein-Chip-Mikrocomputer 3 gesteuert wird. Die getaktete elektrische Versorgung ist für eine Spannungsspeisung als auch für eine Konstantstromspeisung vorgesehen. Die Zeitbasis für die Ablaufsteuerung und die zeitbezogene Auswertung erzeugt ein Quarz oder Resonator 4, der direkt mit dem Mikrocomputer 3 verbunden ist. Während der Versorgungsphase des Luftdrucksensors 2 wird vom Mikrocomputer 3 der aktuelle Luftdrucksensorwert $U_S(t)$ abgefragt und zwischengespeichert. Der Luftdrucksensorwert $U_s(t)$ kann in Form einer Analogspannung, als Frequenz, Periodendauer oder Pulsweitenmodulation vorliegen.

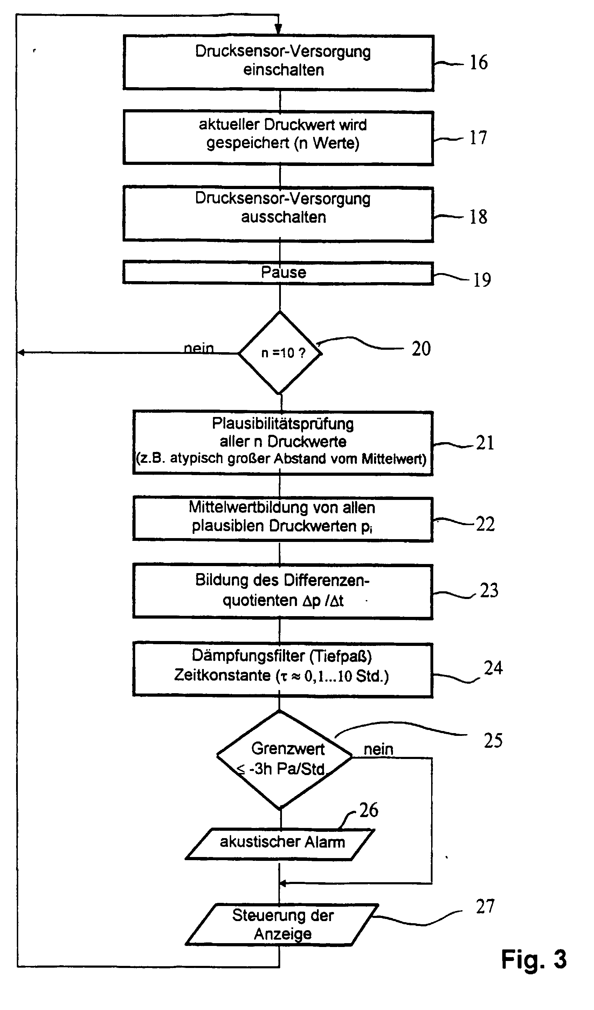

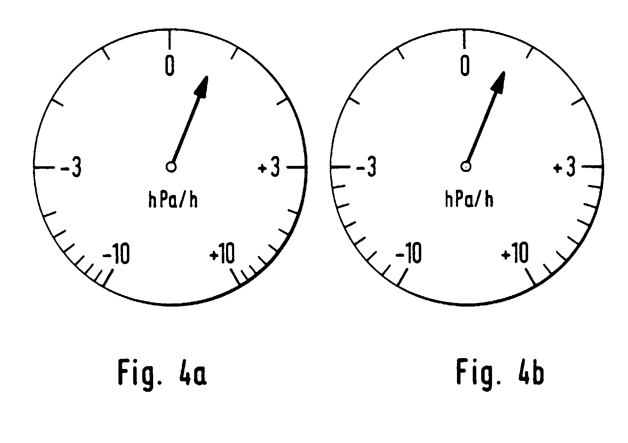

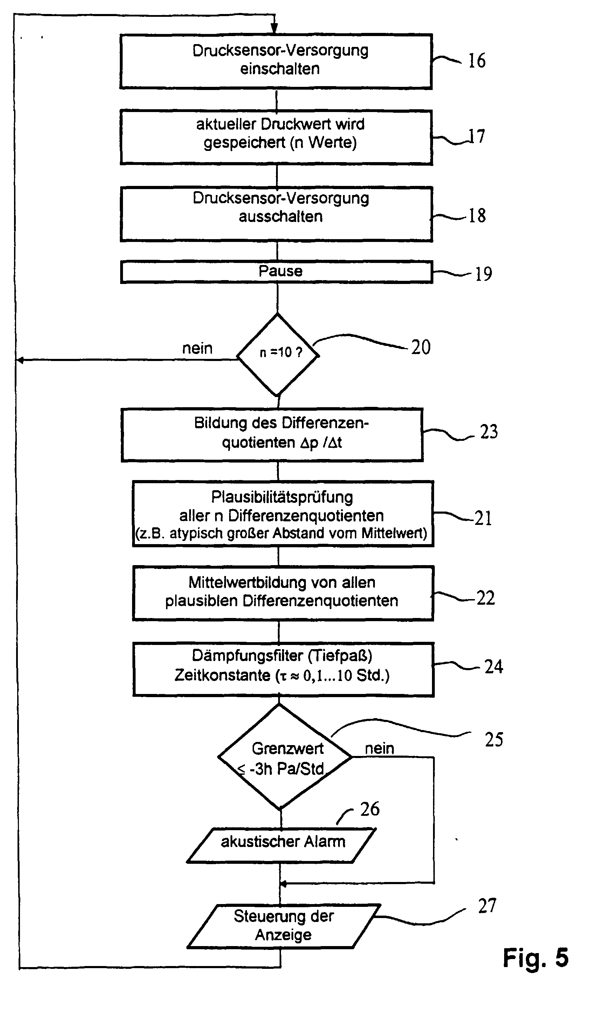

Der Mikrocomputer 3 übernimmt die gesamte Auswertung und Ansteuerung, die in den Figuren 3 oder 5 näher erläutert ist. Ein Schrittmotor 7 ist zweisträngig ausgeführt und wird über zwei Impulssignale 5 und 6 schrittweise angesteuert. Jeder Einzelschritt bedeutet eine viertel oder halbe Umdrehung der Schrittmotorwelle. Das nachgeschaltete Getriebe 8 untersetzt den Schrittwinkel in eine beliebig feine Winkelauflösung für einen Zeigerantrieb. Der Ausgang des Getriebes 8 ist direkt mit einem Zeiger 12 in Figur 2 oder Figur 4 gekoppelt. Eine Anzeige 10 des aktuellen absoluten Luftdruckes steht mit dem Mikrocomputer in Verbindung und ist in Figur 2 auf dem Zifferblatt untergebracht. Ein schraffierter Bereich 13 auf der Skala des Zifferblatts hat die Bedeutung einer nicht signifikanten Wetteränderung und ist besonders herausgestellt. Ein Zeigeranschlag 15 begrenzt den maximalen Ausschlag des Zeigers 12 bei einer Inbetriebnahme der Einrichtung, indem zunächst der Schrittmotor 7 den Zeiger 12 bis zu diesem Zeigeranschlag 15 hinführt, um dann von dem durch den Zeigeranschlag 15 gebildeten Referenzpunkt aus den Zeiger 12 schrittweise zu den tatsächlichen Anzeigewerten hin zu steuern.

Kurz bevor die Versorgungsspannung durch eine nicht dargestellte Batterie die kleinste zulässige Batteriespannung der Einrichtung unterschreitet, wird für eine eindeutige Anzeige der Zeiger 12 auf eine Position 14 gesteuert. Diese Position 14 ist mit einem Batteriesymbol gekennzeichnet und soll auf einen Batteriewechsel hinweisen.

In einer weiteren Darstellung wird die Luftdruckänderungsgeschwindigkeit mit Vorzeichen und Betrag durch ein Flüssigkristalldisplay 11 digital angezeigt, das mit dem Mikrocomputer 3 in Verbindung steht. Bei Unterschreitung eines fest vorgegebenen Schwellwertes einer negativen Luftdruckänderungsgeschwindigkeit wird vom Mikrocomputer 3 ein akustischer Alarm 9 angesteuert. Dieser Alarm stellt eine Sturmwarnung dar, wenn beispielsweise der Schwellwert zwischen - 2 hPa/h und - 5 hPa/h liegt.

Die Ablauffunktion im Mikrocomputer 3 ist im Flußdiagramm in Figur 3 näher erläutert. Zunächst wird die elektrische Versorgung des Luftdrucksensors 2 eingeschaltet (16). Nachdem ein aktueller Luftdruckwert gespeichert ist (17), wird die Versorgung wieder ausgeschaltet (18). Nach einer Pausenzeit (19) von beispielsweise einer Minute wird dieser Meßvorgang beispielsweise n = 10 mal, mindestens jedoch 3 mal wiederholt. Nach diesem Zeitintervall werden alle n Druckwerte auf Plausibilität geprüft (21). Beispielsweise sind alle Luftdruckwerte nicht plausibel, die atypisch große Abstände zu einem Mittelwert aus einer fest vorgegebenen Meßreihe (Beispiel n = 10) aufweisen.

Atypisch bedeutet, daß ein Meßwertabstand innerhalb eines Zeitfensters einer Meßreihe (Beispiel 10 Minuten) größer ist als maximal meteorologische Luftdruckänderungen. Solche extremen Luftdruckänderungen können bei Orkanen im Bereich unter - 10 hPa/h liegen. Zeitintervall und Zeitfenster können gleich sein, müssen es aber nicht.

Kurzfristige Druckwellen, die durch äußere, aber nicht meteorologisch bedingte Einflüsse einwirken können, liegen weitaus höher und werden mit der Plausibilitätsprüfung (21) sicher ausgefiltert. Eine folgende Mittelwertbildung (22) liefert statistisch noch zuverlässigere Werte und ermöglicht darüber hinaus eine noch höhere Auflösung der Druckwerte. Die eigentliche Ermittlung der Luftdruckänderungsgeschwindigkeit erfolgt durch die Bildung des Differenzenquotienten ΔP/Δt (23).

Mit einem nachgeschalteten Tiefpaßfilter 24 wird die Änderung der Anzeige nochmals wirkungsvoll gedämpft, indem eine Zeitkonstante im Bereich zwischen τ ~ 0,1 h bis 10 h gewählt wird. Digitale Tiefpaßfilter können zweckmäßigerweise mit erster Ordnung über die Gleichung

$$A(j\omega) = K/(1 + j\omega\tau)$$

gelöst werden. Durch eine Grenzwertprüfung (25) wird festgestellt, ob ein akustischer Alarm 26 ausgegeben werden soll. Die Ansteuerung des Schrittmotors 7, eines Pfeilsymbols 28 oder einer Digitalanzeige 11 wird durch digitale Schritte ausgeführt.

Das in Figur 5 dargestellte Flußdiagramm einer Ablauffunktion des Mikrocomputers 3 entspricht in den Schritten 16 bis 20 sowie 24 bis 27 der Ablauffunktion in Figur 3. Während in Figur 3 nach dem Schritt 20 die Prüfung der Druckwerte auf Plausibilität, anschließend im Schritt 22 die Mittelwertbildung der plausiblen Druckwerte und dann im Schritt 23 die Bildung des Differenzenquotienten ΔP/Δt erfolgt, werden in Figur 5 nach dem Schritt 20 sofort die einzelnen Differenzenquotienten ΔP/Δt gebildet. Diesem Schritt 23 schließt sich eine Plausibilitätsprüfung aller Differenzenquotienten einer Meßreihe n an, bei der die Differenzenquotienten ausgefiltert werden, die durch kurzfristige Druckwellen aufgrund von äußeren, nicht meteorologischen Einflüssen hervorgerufen werden. Sodann erfolgt im Schritt 22 eine Mittelwertbildung aus allen plausiblen Differenzenquotienten.

Bei den in den Figuren 4 a und 4 b dargestellten Zifferblättern ist die Skala unterschiedlich unterteilt. Der normale Meßbereich zwischen - 3 hPa/h und + 3 hPa/h ist in Figur 4b mit großer Teilung linear dargestellt. Die Meßbereiche zwischen + 3 und + 10 sowie zwischen - 3 und- 10 hPa/h besitzen eine reduzierte lineare Teilung, wobei Figur 4 a eine logarithmische Teilung im gesamten Meßbereich aufweist. In beiden Fällen sind die Skalen im Bereich der Luftdruckänderungsgeschwindigkeit Null gegenüber den Endbereichen der Skalen gespreizt dargestellt. Damit wird ermöglicht, daß auch selten vorkommende, extrem hohe Luftdruckänderungsgeschwindigkeiten, beispielsweise bei Orkanen, nicht zum Meßbereichsanschlag führen und gleichzeitig kleinere Luftdruckänderungsgeschwindigkeiten gut ablesbar sind.

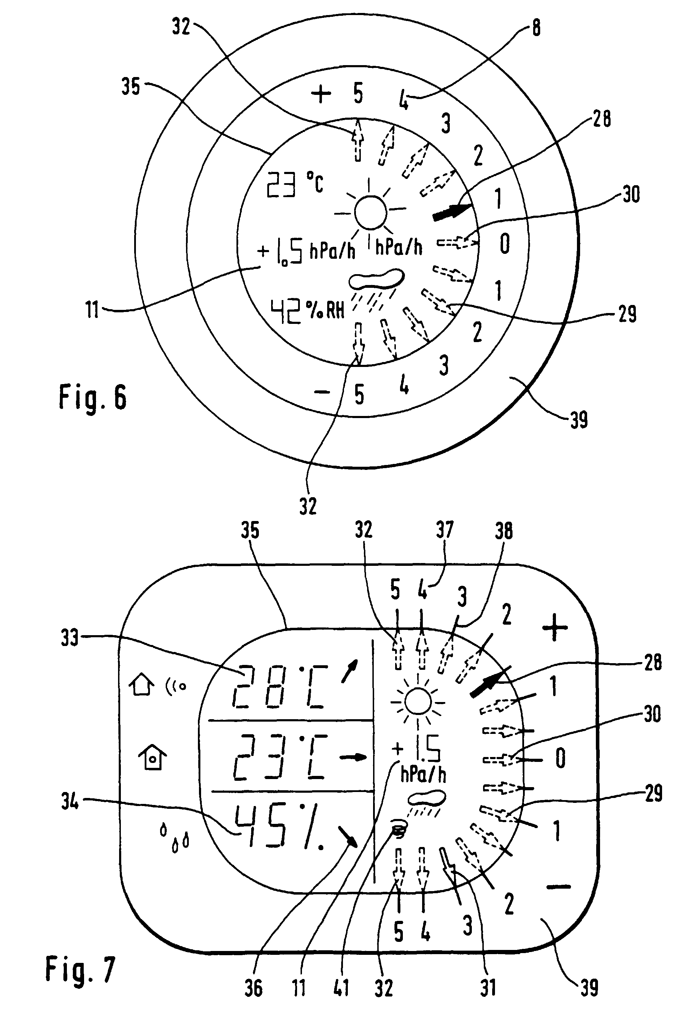

Bei den Ausführungsbeispielen der Figuren 6, 7 und 8 sind die Anzeigen als Flüssigkristalldisplays ausgebildet und weisen anstatt eines Zeigers eine Anzahl von abgestuften Pfeilsymbolen auf, die jeweils auf einen Wert einer Luftdruckänderungsgeschwindigkeit zeigen. Dabei ist die Größe der Luftdruckänderungsgeschwindigkeit in hPa/h angegeben. Das jeweils angesteuerte Pfeilsymbol 28 zeigt den aktuellen Wert an. Alle nicht angesteuerten Pfeilsymbole 29, 30 und 32 sind andeutungsweise mit unterbrochenen Linien gezeichnet und dienen nur der Erläuterung. Das nicht angesteuerte Pfeilsymbol 30 ist für die Luftdruckänderung 0 horizontal angeordnet und bedeutet, daß keine wesentliche Wetterveränderung zu erwarten ist. Das Pfeilsymbol 31 ist in der Realität schwächer als das Pfeilsymbol 28 angesteuert und zeigt einen manuell einstellbaren Grenzwert für eine Sturmwarnung an. Beim Erreichen dieses Grenzwertes wird dieser Symbolpfeil 31 blinkend angesteuert. Gleichzeitig ist ein akustischer Alarm im gleichen Rhythmus ansteuerbar.

Mit der runden bzw. ovalen Anordnung der Pfeilsymbole in den Figuren 6 und 7 ergibt sich gleichzeitig eine zweckmäßige Steigung jeder einzelnen Pfeilausrichtung. In Figur 7 mit der oval gekrümmten Anordnung der Symbolpfeile ist auch eine Spreizung der Skalierung vorhanden. Die senkrecht ausgerichteten Pfeilsymbole 32 der halbkreisförmigen Skala des Meßbereichs deuten auf das Meßbereichsende hin und signalisieren extreme Wetterveränderungen.

Die Nutzung der jeweils rechten Hälfte der Anzeigefelder 35 der Zifferblätter in den Figuren 6 und 7 ermöglichen weitere Anzeigen für Temperatur 33 und relative Luftfeuchtigkeit 34 auf der linken Hälfte des Anzeigefeldes 35. Dabei können die als Digitalanzeigen ausgebildeten Anzeigen der Temperatur 33 und der Luftfeuchtigkeit 34 zu Zwecken von Trendprognosen durch jeweils drei ansteuerbare Pfeilsymbole 36 für steigende, bleibende und fallende Werte ergänzt werden.

Die digitalen Anzeigewerte für die Luftdruckänderungsgeschwindigkeit 11 können auch auf den Anzeigefeldern 35 untergebracht sein. Eine Aufbringung der Ziffern 37 und der Skala 38 ist direkt auf das Gehäuse 39 der Einrichtung vorgesehen.

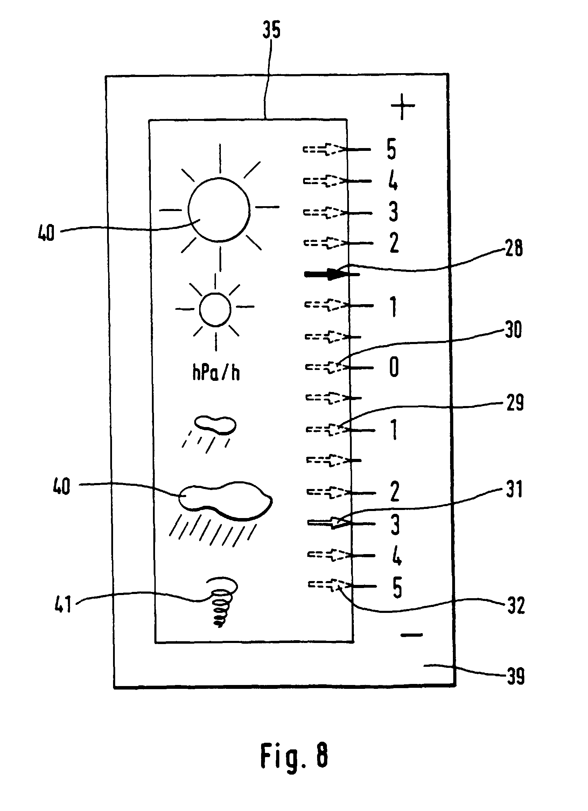

In Figur 8 sind alle Pfeilsymbole 28 bis 32 horizontal ausgerichtet und deuten über die vertikale Anordnung der Skala auf steigende oder fallende Wetterveränderung hin. Die nebenstehenden Sonnen- und Regensymbole 40 sind so angeordnet, daß sie in etwa der gleichen Höhe der korrespondierenden Größen der Luftdruckänderungen stehen.

Bei extrem fallenden Luftdruckänderungen unterhalb des Grenzwertes für eine Sturmwarnung wird ein Anzeigesymbol 41 blinkend angesteuert. Zweckmäßigerweise ist das Anzeigesymbol 41 als Orkanzeichen ausgebildet. Dazu ist zusätzlich ein akustischer Dauerton ansteuerbar. Die in der Beschreibung verwendeten Zeichen haben folgende Bedeutung:

$U_{Batt} =$      Batteriespannung (V)
$U_{VP}(t) =$    Versorgungsspannung des Drucksensors (V)
$U_S(t) =$     Sensorausgangsspannung (V)
$\tau =$          Zeitkonstante (s)
$A_{(j\omega)} =$     Filterausgangsgröße (hPa/h)
$j =$           imaginäre Einheit
$\omega =$         Kreisfrequenz (1/s)
$K =$         Filtereingangsgröße (hPa/h)

## Patentansprüche

1. Einrichtung zur Darstellung barometrischer Luftdruckveränderungen mit einem elektronischen Luftdrucksensor und einer digitalen Differenzierschaltung, in der ein Differenzenquotient ΔP/Δt gebildet wird, der mit einer Anzeige der Luftdruckänderungsgeschwindigkeit mit Vorzeichen und Betrag in Verbindung steht, **dadurch gekennzeichnet**, daß die elektrische Versorgung des Luftdrucksensors (2) in zyklischen Intervallen erfolgt und daß die zyklisch ermittelten Luftdruckmeßwerte auf Plausibilität geprüft werden, wobei nur die plausiblen Luftdruckmeßwerte für die Differenzenquotienten ΔP/Δt berücksichtigt werden.

2. Einrichtung nach dem Oberbegriff des Anspruchs 1, **dadurch gekennzeichnet**, daß die elektrische Versorgung des Luftdrucksensors (2) in zyklischen Intervallen erfolgt, daß von den zyklisch ermittelten Luftdruckmeßwerten die Differenzenquotienten ΔP/Δt gebildet und die Differenzenquotienten ΔP/Δt auf Plausibilität geprüft werden, wobei nur die plausiblen Differenzenquotienten zur Ansteuerung der Anzeige berücksichtigt werden.

3. Einrichtung nach einem der vorhergehenden Ansprüche, **dadurch gekennzeichnet**, daß mindestens drei Luftdruckmeßwerte in einem vorgegebenen Zeitintervall abgefragt und in einem Speicher zwischengespeichert werden.

4. Einrichtung nach einem der vorhergehenden Ansprüche, **dadurch gekennzeichnet**, daß die Plausibilität durch atypisch große Abweichungen einzelner Luftdruckmeßwerte von einem Mittelwert der Luftdruckmeßwerte oder atypisch große Abweichungen einzelner Differenzenquotienten von einem Mittelwert der gebildeten Differenzenquotienten eines fest vorgegebenen Zeitfensters ermittelt wird.

5. Einrichtung nach einem der vorhergehenden Ansprüche, **dadurch gekennzeichnet**, daß die Pause zwischen den Abfragezeitpunkten der Luftdruckmeßwerte etwa zwischen ein und zehn Minuten beträgt.

6. Einrichtung nach einem der Ansprüche 1 bis 4, **dadurch gekennzeichnet**, daß die Pause zwischen den Abfragezeitpunkten der Luftdruckmeßwerte etwa zwischen 0,5 und 5 Minuten beträgt.

7. Einrichtung nach einem der vorhergehenden Ansprüche, **dadurch gekennzeichnet**, daß der ermittelte aktuelle Differenzenquotient ΔP/Δt oder der Mittelwert der gebildeten aktuellen plausiblen Differenzenquotienten ΔP/Δt über ein digitales Tiefpaßfilter (24) der Anzeige zugeführt wird.

8. Einrichtung nach Anspruch 7, **dadurch gekennzeichnet**, daß die Zeitkonstante des digitalen Tiefpaßfilters (24) etwa zwischen 0,1 und 10 Stunden liegt.

9. Einrichtung nach einem der vorhergehenden Ansprüche, **dadurch gekennzeichnet**, daß die Anzeige ein Flüssigkristalldisplay (11) ist.

10. Einrichtung nach Anspruch 9, **dadurch gekennzeichnet**, daß durch die Anzeige des Flüssigkristalldisplays (11) mindestens fünf abhängig von der ermittelten Luftdruckveränderung ansteuerbare Pfeilsymbole (28 bis 32) darstellbar sind, die in einer Reihe angeordnet sind, daß jedes Pfeilsymbol (28 bis 32) einem bestimmten Wert einer Luftdruckveränderung zugeordnet ist und die Pfeilrichtung des Pfeilsymbols (30) für die Luftdruckänderung 0 etwa horizontal gerichtet ist.

11. Anordnung nach Anspruch 10, **dadurch gekennzeichnet**, daß die Reihe der Pfeilsymbole (28 bis 32) und ggf. die Skala sich in einer etwa runden Form erstreckt.

12. Anordnung nach Anspruch 10, **dadurch gekennzeichnet**, daß die Reihe der Pfeilsymbole (28 bis 32) und ggf. die Skala (38) sich in einer etwa ovalen Form erstreckt.

13. Anordnung nach Anspruch 10, **dadurch gekennzeichnet**, daß die Reihe der Pfeilsymbole (28 bis 32) und ggf. die Skala (38) sich halbkreisförmig erstreckt.

14. Einrichtung nach einem der vorhergehenden Ansprüche, **gekennzeichnet durch** eine nichtlineare Skalierung der Luftdruckänderungsgeschwindigkeit auf einem Zifferblatt der Anzeige.

15. Einrichtung nach einem der Ansprüche 1 bis 13, **gekennzeichnet durch** eine in Bereiche aufgeteilte unterschiedliche Skalierung der Luftdruckänderungsgeschwindigkeit auf einem Zifferblatt der Anzeige.

16. Anordnung nach einem der vorhergehenden Ansprüche, **dadurch gekennzeichnet**, daß die Skala im Bereich der Luftdruckänderungsgeschwindigkeit 0 gegenüber den Endbereichen der Skala gespreizt ist.

17. Anordnung nach einem der vorhergehenden Ansprüche, **dadurch gekennzeichnet**, daß der Anzeigebereich der Luftdruckänderungsgeschwindigkeit sich im wesentlich zwischen - 5 und + 5 hPa/h erstreckt.

18. Einrichtung nach einem der vorhergehenden Ansprüche, **dadurch gekennzeichnet**, daß der Luftdrucksensor (2) ein kapazitiver Luftdrucksensor ist.

19. Einrichtung nach einem der Ansprüche 1 bis 17, **dadurch gekennzeichnet**, daß der Luftdrucksensor (2) ein piezoresistiver Luftdrucksensor ist und aus einem dotierten Halbleiter besteht.

20. Einrichtung nach einem der Ansprüche 1 bis 8 und 13 bis 18, **dadurch gekennzeichnet,** daß die Anzeige einen von einem Schrittmotor (7) antreibbaren Zeiger (12) aufweist.

21. Einrichtung nach Anspruch 20, **dadurch gekennzeichnet**, daß der Zeiger (12) über ein Getriebe (8) von dem Schrittmotor (7) antreibbar ist.

22. Einrichtung nach Anspruch 20, **dadurch gekennzeichnet**, daß der Schrittmotor (7) ein zweisträngiger Schrittmotor mit Impulsansteuerung für beide Drehrichtungen ist.

23. Einrichtung nach einem der Ansprüche 20 bis 22, **dadurch gekennzeichnet**, daß der Zeiger (12) der Anzeige bei Inbetriebnahme zuerst zu einem definierten Referenzpunkt gesteuert wird und danach durch schrittweises Auf- und Abzählen zu dem Anzeigemeßwert geführt wird.

24. Einrichtung nach Anspruch 23, **dadurch gekennzeichnet**, daß der definierte Referenzpunkt als Zeigeranschlag (15) des Zeigers (12) ausgebildet ist.

25. Einrichtung nach einem der Ansprüche 20 bis 22, **dadurch gekennzeichnet**, daß der Zeiger (12) vor Unterschreitung der kleinsten zulässigen Betriebsspannung auf eine Warnposition (14) außerhalb der Meßbereichsanzeige gesteuert wird.

26. Einrichtung nach einem der vorhergehenden Ansprüche, **dadurch gekennzeichnet**, daß bei Unterschreitung eines vorgegebenen negativen Luftdruckänderungsgeschwindigkeits-Grenzwerts eine optische Warnanzeige ansteuerbar ist.

27. Einrichtung nach einem der vorhergehenden Ansprüche, **dadurch gekennzeichnet**, daß bei Unterschreitung eines vorgegebenen negativen Luftdruckänderungsgeschwindigkeits-Schwellwertes ein akustischer Alarm (9) ansteuerbar ist.

**28.** Einrichtung nach einem der vorhergehenden Ansprüche, **dadurch gekennzeichnet**, daß bei Unterschreitung eines Sturmwarnungsgrenzwertes der Luftdruckänderungsgeschwindigkeit ein Anzeigesymbol (41) blinkend angesteuert wird.

**29.** Einrichtung nach einem der vorhergehenden Ansprüche, **dadurch gekennzeichnet**, daß als weitere Größe der absolute atmosphärische Luftdruck auf der Anzeige (10) darstellbar ist.

**Claims**

**1.** Device for representing barometric air pressure variations, having an electronic air pressure sensor and a digital differentiating circuit in which a differential quotient $\Delta P/\Delta t$ is formed which is connected to a display of the rate of change in air pressure including sign and absolute value, characterized in that the air pressure sensor (2) is supplied electrically in cyclic intervals, and in that the cyclically determined measured values of air pressure are checked for plausibility, account being taken for the differential quotients $\Delta P/\Delta t$ only of the plausible measured values of air pressure.

**2.** Device according to the preamble of Claim 1, characterized in that the air pressure sensor (2) is supplied electrically in cyclic intervals, in that the differential quotients $\Delta P/\Delta t$ of the cyclically determined measured values of air pressure are formed and the differential quotients $\Delta P/\Delta t$ are checked for plausibility, account being taken for the purpose of controlling the display only of the plausible differential quotients.

**3.** Device according to one of the preceding claims, characterized in that at least three measured values of air pressure are interrogated in a prescribed time interval and are buffered in a memory.

**4.** Device according to one of the preceding claims, characterized in that plausibility is determined by means of atypically large deviations in individual measured values of air pressure from a mean value of the measured values of air pressure or atypically large deviations in individual differential quotients from a mean value of the differential quotients formed for a permanently prescribed time window.

**5.** Device according to one of the preceding claims, characterized in that the pause between the interrogation instants of the measured values of air pressure is approximately between one and ten minutes.

**6.** Device according to one of Claims 1 to 4, characterized in that the pause between the interrogation instants of the measured values of air pressure is approximately between 0.5 and 5 minutes.

**7.** Device according to one of the preceding claims, characterized in that the determined current differential quotient $\Delta P/\Delta t$ or the mean value of the current plausible differential quotients $\Delta P/\Delta t$ formed is fed to the display via a digital low-pass filter (24).

**8.** Device according to Claim 7, characterized in that the time constant of the digital low-pass filter (24) is approximately between 0.1 and 10 hours.

**9.** Device according to one of the preceding claims, characterized in that the display is a liquid crystal display (11).

**10.** Device according to Claim 9, characterized in that the display of the liquid crystal display (11) can display at least five arrow symbols (28 to 32), which can be controlled as a function of the determined air pressure variation, and which are arranged in a row, and in that each arrow symbol (28 to 32) is assigned to a specific value of an air pressure variation and the arrow direction of the arrow symbol (30) is directed approximately horizontally for the air pressure change 0.

**11.** Device according to Claim 10, characterized in that the row of the arrow symbols (28 to 32) and, if appropriate, the scale extends in an approximately round shape.

**12.** Device according to Claim 10, characterized in that the row of the arrow symbols (28 to 32) and, if appropriate, the scale (38) extends in an approximately oval shape.

**13.** Device according to Claim 10, characterized in that the row of the arrow symbols (28 to 32) and, if appropriate, the scale (38) extends in a semicircular shape.

14. Device according to one of the preceding claims, characterized by a nonlinear scaling of the rate of change in air pressure on a dial of the display.

15. Device according to one of Claims 1 to 13, characterized by a scaling of the rate of change in air pressure on a dial of the display in a fashion divided into different ranges.

16. Device according to one of the preceding claims, characterized in that the scale in the range of the rate of change in air pressure of 0 is spread by comparison with the terminal ranges of the scale.

17. Device according to one of the preceding claims, characterized in that the display range of the rate of change in air pressure extends essentially between -5 and +5 hPa/h.

18. Device according to one of the preceding claims, characterized in that the air pressure sensor (2) is a capacitive air pressure sensor.

19. Device according to one of Claims 1 to 17, characterized in that the air pressure sensor (2) is a piezoresistive air pressure sensor and consists of a doped semiconductor.

20. Device according to one of Claims 1 to 8 and 13 to 18, characterized in that the display has a pointer (12) which can be driven by a stepping motor (7).

21. Device according to Claim 20, characterized in that the pointer (12) can be driven via a gear unit (8) by the stepping motor (7).

22. Device according to Claim 20, characterized in that the stepping motor (7) is a two-phase stepping motor with pulse control for both directions of rotation.

23. Device according to one of Claims 20 to 22, characterized in that the pointer (12) of the display is firstly controlled to a defined reference point during startup, and is then guided to the display measured value by stepwise counting up and down.

24. Device according to Claim 23, characterized in that the defined reference point is constructed as a pointer stop (15) of the pointer (12).

25. Device according to one of Claims 20 to 22, characterized in that before undershooting the smallest permissible operating voltage, the pointer (12) is controlled to a warning position (14) outside the measuring range display.

26. Device according to one of the preceding claims, characterized in that an optimum warning display can be triggered upon undershooting of a prescribed negative limiting value of the rate of change in air pressure.

27. Device according to one of the preceding claims, characterized in that an acoustic alarm (9) can be triggered upon undershooting of a prescribed negative threshold value of the rate of change in air pressure.

28. Device according to one of the preceding claims, characterized in that a display symbol (41) can be triggered in a flashing fashion upon undershooting of a storm warning limiting value of the rate of change in air pressure.

29. Device according to one of the preceding claims, characterized in that the absolute atmospheric air pressure can be displayed on the display (10) as a further variable.

**Revendications**

1. Dispositif pour représenter les variations barométriques de la pression de l'air avec un capteur de pression d'air électronique et un circuit soustracteur numérique, dans lequel est formé un quotient de différences $\Delta P/\Delta t$, qui est relié avec un indicateur de la vitesse de variation de la pression de l'air avec signe et valeur, caractérisé en ce que l'alimentation électrique du capteur de pression d'air (2) est réalisée à intervalles cycliques et en ce qu'un contrôle de plausibilité est effectué sur les valeurs mesurées cycliquement de la pression de l'air, seules les valeurs de pression de l'air plausibles étant prises en compte pour les quotients de différences $\Delta P/\Delta t$.

2. Dispositif selon le préambule de la revendication 1, caractérisé en ce que l'alimentation électrique du capteur de pression d'air (2) est réalisée à intervalles cycliques, en ce que les quotients de différences $\Delta P/\Delta t$ sont formés à partir des valeurs mesurées cycliquement de la pression de l'air et en ce qu'un contrôle de plausibilité est effectué sur les quotients de différences $\Delta P/\Delta t$, seules les quotients de différences plausibles étant pris en compte pour la commande de l'indicateur.

3. Dispositif selon l'une des revendications précédentes, caractérisé en ce qu'au moins trois valeurs mesurées de la pression de l'air sont interrogées dans un intervalle de temps donné et stockées provisoirement dans une mémoire.

4. Dispositif selon l'une des revendications précédentes, caractérisé par le fait que la plausibilité est déterminée par les écarts d'importance atypique de chacune des valeurs mesurées de la pression de l'air par rapport à une valeur moyenne des valeurs mesurées de la pression de l'air ou par les écarts d'importance atypique de chacun des quotients de différences par rapport à une valeur moyenne des quotients de différences obtenus d'un créneau temporel donné.

5. Dispositif selon l'une des revendications précédentes, caractérisé par le fait que la pause entre les moments d'interrogation des valeurs mesurées de la pression de l'air est comprise entre une et dix minutes environ.

6. Dispositif selon l'une des revendications 1 à 4, caractérisé par le fait que la pause entre les moments d'interrogation des valeurs mesurées de la pression de l'air est comprise entre 0,5 et 5 minutes environ.

7. Dispositif selon l'une des revendications précédentes, caractérisé par le fait que le quotient de différences $\Delta P/\Delta t$ actuellement déterminé ou la valeur moyenne des quotients de différences $\Delta P/\Delta t$ plausibles actuellement déterminés est acheminé à l'indicateur par le biais d'un filtre passe-bas numérique (24).

8. Dispositif selon la revendication 7, caractérisé par le fait que la constante de temps du filtre passe-bas numérique (24) est comprise entre 0,1 et 10 heures environ.

9. Dispositif selon l'une des revendications précédentes, caractérisé par le fait que l'indicateur est un afficheur à cristaux liquides (11).

10. Dispositif selon la revendication 9, caractérisé par le fait que l'indication de l'afficheur à cristaux liquides (11) permet de représenter au moins cinq symboles fléchés (28 à 32) disposés en ligne qui sont commandables en fonction de la variation de la pression de l'air, en ce que chaque symbole fléché (28 à 32) est associé à une valeur précise de variation de la pression de l'air et la flèche du symbole (30) correspondant à une variation nulle de la pression de l'air est dirigée à peu près dans le sens horizontal.

11. Arrangement selon la revendication 10, caractérisé par le fait que la ligne des symboles fléchés (28 à 32) et, le cas échéant, la graduation s'étendent sur une forme à peu près ronde.

12. Arrangement selon la revendication 10, caractérisé par le fait que la ligne des symboles fléchés (28 à 32) et, le cas échéant, la graduation (38) s'étendent sur une forme à peu près ovale.

13. Arrangement selon la revendication 10, caractérisé par le fait que la ligne des symboles fléchés (28 à 32) et, le cas échéant, la graduation (38) s'étendent sur une forme en demi-cercle.

14. Arrangement selon l'une des revendications précédentes, caractérisé par une graduation non linéaire de la vitesse de variation de la pression de l'air sur un cadran de l'indicateur.

15. Arrangement selon l'une des revendications 1 à 13, caractérisé par une graduation différente divisée en zones de la vitesse de variation de la pression de l'air sur un cadran de l'indicateur.

16. Arrangement selon l'une des revendications précédentes, caractérisé par le fait que la graduation est élargie dans la zone de vitesse de variation nulle de la pression de l'air par rapport aux zones d'extrémité de la graduation.

**17.** Arrangement selon l'une des revendications précédentes, caractérisé par le fait que la zone d'indication de la vitesse de variation de la pression de l'air s'étend essentiellement entre -5 et +5 hPa/h.

**18.** Dispositif selon l'une des revendications précédentes, caractérisé par le fait que le capteur de pression d'air (2) est un capteur de pression d'air capacitif.

**19.** Dispositif selon l'une des revendications 1 à 17, caractérisé par le fait que le capteur de pression d'air (2) est un capteur de pression d'air piézorésistif et qu'il se compose d'un semiconducteur dopé.

**20.** Dispositif selon l'une des revendications 1 à 8 et 13 à 18, caractérisé par le fait que l'indicateur présente une aiguille (12) qui peut être entraînée par un moteur pas à pas (7).

**21.** Dispositif selon la revendication 20, caractérisé par le fait que l'aiguille (12) peut être entraînée par le moteur pas à pas (7) par l'intermédiaire d'un engrenage (8).

**22.** Dispositif selon la revendication 20, caractérisé par le fait que le moteur pas à pas (7) est un moteur pas à pas à deux brins avec commande par impulsions pour les deux sens de rotation.

**23.** Dispositif selon l'une des revendications 20 à 22, caractérisé par le fait que l'aiguille (12) de l'indicateur, au moment de la mise en service, est tout d'abord amenée à un point de référence défini pour ensuite être déplacée jusqu'à la valeur mesurée à afficher par un comptage et un décomptage pas à pas.

**24.** Dispositif selon la revendication 23, caractérisé par le fait que le point de référence défini est réalisé sous la forme d'une butée d'aiguille (15) pour l'aiguille (12).

**25.** Dispositif selon l'une des revendications 20 à 22, caractérisé par le fait que l'aiguille (12) est amenée sur une position d'alerte (14) en-dehors de l'indication de la plage de mesure avant que la tension ne devienne inférieure à la tension de service minimale admissible.

**26.** Dispositif selon l'une des revendications précédentes, caractérisé par le fait qu'un indicateur d'alerte visuel peut être commandé si la vitesse de variation de la pression de l'air devient inférieure à une valeur limite négative donnée.

**27.** Dispositif selon l'une des revendications précédentes, caractérisé par le fait qu'une alarme sonore (9) peut être commandée si la vitesse de variation de la pression de l'air devient inférieure à une valeur limite négative donnée.

**28.** Dispositif selon l'une des revendications précédentes, caractérisé par le fait qu'un symbole de l'indicateur (41) se met à clignoter si la vitesse de variation de la pression de l'air devient inférieure à une valeur limite d'avertissement de tempête.

**29.** Dispositif selon l'une des revendications précédentes, caractérisé par le fait que la pression atmosphérique peut être représentée en tant qu'autre grandeur sur l'indicateur (10).

Fig. 1

Fig. 2

```
          ┌─────────────────────────────┐
          │   Drucksensor-Versorgung     │──── 16
          │       einschalten           │
          └─────────────────────────────┘
                       │
          ┌─────────────────────────────┐
          │   aktueller Druckwert wird   │──── 17
          │   gespeichert (n Werte)      │
          └─────────────────────────────┘
                       │
          ┌─────────────────────────────┐
          │   Drucksensor-Versorgung     │──── 18
          │       ausschalten           │
          └─────────────────────────────┘
                       │
          ┌─────────────────────────────┐
          │           Pause             │──── 19
          └─────────────────────────────┘
                       │
                      ╱ ╲
              nein   ╱     ╲
          ◄─────────╱ n =10 ?╲──── 20
                    ╲        ╱
                     ╲      ╱
                      ╲    ╱
                       │
          ┌─────────────────────────────┐
          │     Plausibilitätsprüfung    │──── 21
          │      aller n Druckwerte      │
          │(z.B. atypisch großer Abstand vom Mittelwert)│
          └─────────────────────────────┘
                       │
          ┌─────────────────────────────┐
          │  Mittelwertbildung von allen │──── 22
          │   plausiblen Druckwerten p_i │
          └─────────────────────────────┘
                       │
          ┌─────────────────────────────┐
          │   Bildung des Differenzen-   │──── 23
          │   quotienten Δp /Δt          │
          └─────────────────────────────┘
                       │
          ┌─────────────────────────────┐
          │   Dämpfungsfilter (Tiefpaß)  │──── 24
          │ Zeitkonstante (τ ≈ 0,1...10 Std.)│
          └─────────────────────────────┘
                       │
                      ╱ ╲
                     ╱     ╲   nein
                    ╱Grenzwert╲──── 25
                    ╲≤ -3h Pa/Std╱
                     ╲        ╱
                      ╲      ╱
                       │
               ╱────────────────╱ ── 26
              ╱ akustischer Alarm╱
             ╱────────────────╱
                       │
               ╱────────────────╱
              ╱  Steuerung der   ╱ ── 27
             ╱    Anzeige        ╱
            ╱────────────────╱
```

$\Delta p / \Delta t$

$\tau \approx 0,1...10$ Std.

**Fig. 3**

Fig. 4a

Fig. 4b

```
┌─────────────────────────┐
│ Drucksensor-Versorgung  │——— 16
│ einschalten             │
└─────────────────────────┘
┌─────────────────────────┐
│ aktueller Druckwert wird│——— 17
│ gespeichert (n Werte)   │
└─────────────────────────┘
┌─────────────────────────┐
│ Drucksensor-Versorgung  │——— 18
│ ausschalten             │
└─────────────────────────┘
┌─────────────────────────┐
│          Pause          │——— 19
└─────────────────────────┘
        nein ◄—— ◇ n =10 ? ◇ ——— 20
┌─────────────────────────┐
│ Bildung des Differenzen-│——— 23
│ quotienten Δp /Δt       │
└─────────────────────────┘
┌──────────────────────────────────────────┐
│ Plausibilitätsprüfung                     │——— 21
│ aller n Differenzenquotienten             │
│ (z.B. atypisch großer Abstand vom Mittelwert)│
└──────────────────────────────────────────┘
┌─────────────────────────┐
│ Mittelwertbildung von allen │——— 22
│ plausiblen Differenzenquotienten │
└─────────────────────────┘
┌─────────────────────────┐
│ Dämpfungsfilter (Tiefpaß)│——— 24
│ Zeitkonstante (τ ≈ 0,1...10 Std.) │
└─────────────────────────┘
        ◇ Grenzwert ≤ -3h Pa/Std ◇ —nein— ——— 25
┌─────────────────────────┐
│ akustischer Alarm       │——— 26
└─────────────────────────┘
┌─────────────────────────┐
│ Steuerung der           │——— 27
│ Anzeige                 │
└─────────────────────────┘
```

**Fig. 5**

Fig. 6

Fig. 7

Fig. 8